# EUROPEAN PATENT SPECIFICATION

(11) **EP 4 641 365 B1**
(45) Date of publication and mention of the grant of the patent: **10.06.2026**
(21) Application number: 25161182.8
(22) Date of filing: 03.03.2025
(51) Int. Cl.: G06F 3/12, H04N 1/00, H04N 1/23, B41J 3/60

(54) **SINGLE-SIDED AND DOUBLE-SIDED MIXED PRINTING METHOD AND RELATED DEVICES**
EINSEITIGES UND DOPPELSEITIGES MISCHDRUCKVERFAHREN UND ZUGEHÖRIGE VORRICHTUNGEN
PROCÉDÉ D'IMPRESSION MIXTE SIMPLE FACE ET DOUBLE FACE ET DISPOSITIFS ASSOCIÉS

(30) Priority: 22.04.2024 CN 202410487978
(43) Date of publication of application: 29.10.2025
(73) Proprietor: Zhuhai Pantum Electronics Co., Ltd., Zhuhai, Guangdong (CN)
(72) Inventor: LI, Hongyan, Zhuhai (CN)
(74) Representative: Sun, Yiming

(56) References cited:
- JP-A- 2012 098 938
- JP-A- H07 134 707
- US-A1- 2006 171 002
- US-A1- 2016 255 236

## Description

### TECHNICAL FIELD

The invention relates to the technical field of image forming devices, and in particular to a single-sided and double-sided mixed printing method and related devices.

### BACKGROUND

When printing papers, textbooks, and other printing tasks, the table of contents and cover may need to be printed on one side, while the main text needs to be printed on two sides. This means that when printing such texts, it is necessary to issue single-sided and double-sided printing tasks separately, and the page order needs to be manually manipulated after printing. This method makes the printing process more cumbersome and time-consuming. Therefore, how to improve the printing efficiency of single-sided and double-sided mixed printing and the user's printing experience is a problem that needs to be solved urgently.

US 2006/171002 discloses printing a document from an editing application in which front and back page positions are determined to print a mixture of single- and double-sided pages.

### SUMMARY

In view of the foregoing, the present invention provides a single-sided and double-sided mixed printing method and related devices to solve the complex and inefficient problems with single-sided and double-sided mixed printing processes in the existing technologies. To achieve above-mentioned objective, the invention is set out in the appended claims.

### BRIEF DESCRIPTION OF THE DRAWINGS

In order to more thoroughly illustrate the technical solutions of the embodiments of the present disclosure, the drawings essential for understanding the embodiments of the disclosure will be briefly introduced hereinafter. Apparently, the drawings described below are merely some embodiments of the present disclosure. For a person skilled in the art, other drawings can be obtained based on these drawings without making creative efforts.
FIG. 1 is a flowchart of a single-sided and double-sided mixed printing method in accordance with an embodiment of the present disclosure;
FIG. 2 is a schematic diagram of a print driver interface in accordance with an embodiment of the present disclosure;
FIG. 3 is a flow diagram of a single-sided and double-sided mixed printing method in accordance with an embodiment of the present disclosure;
FIG. 4 is a schematic structural diagram of an image forming device in accordance with an embodiment of the present disclosure; and
FIG. 5 is a schematic structural diagram of an electronic device in accordance with an embodiment of the present disclosure.

### DETAILED DESCRIPTION

In order to better understand the technical solution of the present disclosure, the embodiments of the present disclosure are described in detail hereinafter with reference to the accompanying drawings.

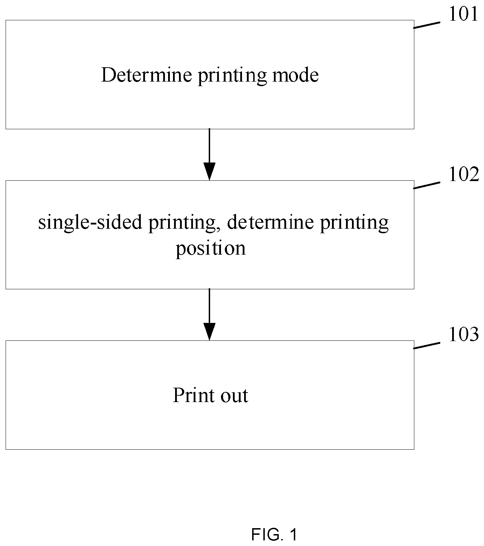

The current single-sided and double-sided mixed printing application scenarios mainly include: the table of contents, cover, chapter titles, and other parts of a book need to be printed on a single side, the cover, table of contents, abstract, references, and other parts of a paper need to be printed on a single side, while other parts are printed on both sides. Users need to issue single-sided and double-sided printing tasks separately, and manually manipulate the page order after the printing is completed, which is cumbersome. In order to solve these problems, embodiments disclosed herein provide a single-sided and double-sided mixed printing method, which does not require users to issue single-sided and double-sided printing tasks separately. The method also does not require users to manually manipulate the order of printed pages after printing, which can improve the user experience. FIG. 1 illustrates a single-sided and double-sided mixed printing method in accordance with an embodiment of the present disclosure. As shown in FIG. 1, the method includes the following steps.

Step 101: Determine a printing mode for a first to-be-printed page currently to be printed.

The to-be-printed pages are the printing data in pages sent by the image forming device. The image forming device splits the original to-be-printed document, such as text data and/or image data, into multiple to-be-printed pages according to the received typesetting and configuration information, and prints out each to-be-printed page in a certain order. The printing modes include single-sided printing or double-sided printing. Single-sided printing specifically refers to printing and imaging only on one side of the imaging medium (such as paper, etc.), and not on the other side. Double-sided printing specifically refers to printing on both the front and back sides of the paper.

Here, a user can set printing configuration on a driver interface of the image forming device. Specifically, through a terminal device such as a personal computer (PC) connected to the image forming device, the user can make specific settings for the printing configuration on the driver interface of the PC, and issue a printing task to the image forming device. For example, the user can click the "print" option on a target document or a target image on the PC, and the image forming device displays the print driver interface in response to the click operation, so that specific print settings can be performed on the related printing configuration interface. The image forming device can determine the printing modes of the current to-be-printed pages based on the printing parameters of the printing task currently being executed. Optionally, the user can also directly set the printing configuration on the operation panel of the image forming device. For example, the user can select the print setting options on the operation panel, and the image forming device responds to the selection operation by displaying the print setting interface, which includes multiple sub-items that can be selected and adjusted. The user can make specific changes and settings to the printing configuration on the print setting interface.

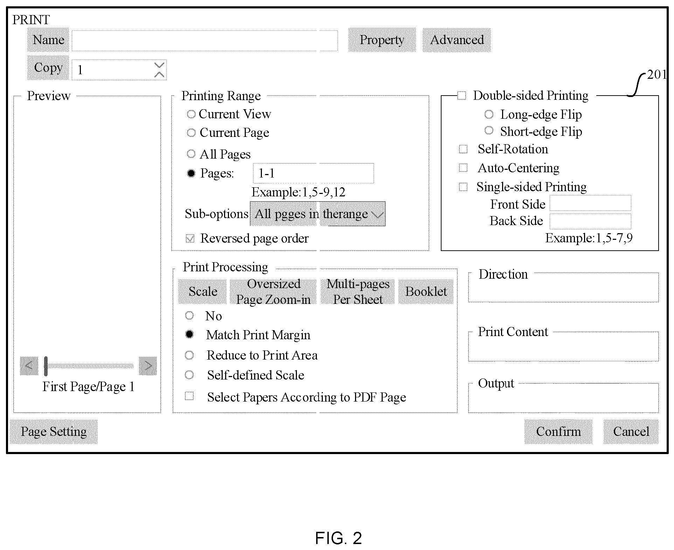

FIG. 2 is a schematic diagram of a print driver interface in accordance with an embodiment of the present disclosure. As shown in FIG. 2, a user can perform specific printing configuration operations in the interface. The print driver interface shown in FIG. 2 includes multiple mandatory and optional items. As shown in FIG. 2, printing range and print processing are mandatory items. For the printing range, a user can select the current view, current page, all pages, or any one of the pages for printing. When the user selects the "pages" option, the rectangular input area behind the option and the subset options thereunder are activated, where the user can enter the specific page range in the rectangular input area, and select, through the subset options, whether to print all pages or only some pages within the range.

With respect to the print processing, multiple optional tabs are included, such as the "scale" option, "oversized page zoom-in" option, "multiple pages per sheet" option, and "booklet" option, etc. When the user selects the "scale" option, the position of the target document or image to be printed on the paper can be adjusted, e.g., making the target document or image automatically match the print margin output, making the target document or image output at a scale reduced to the print area, making the target document or image output according to a user-defined scale, or making the target document or image output according to a paper selection method in the format of PDF page.

Area 201 shown in FIG. 2 is the single-sided and double-sided printing configuration option, which is optional. The single-sided and double-sided printing configuration option can set the printing mode and printing position of a to-be-printed page, which includes several sub-options such as "double-sided printing", "single-sided printing", "self-rotation", and "auto-centering", etc. Here, "double-sided printing" is used to indicate that the printing mode is double-sided printing, and "single-sided printing" is used to indicate that the printing mode is single-sided printing. When the user selects the single-sided printing option, the user can also select a to-be-printed page to print on the front side or print on the back side, and set the page range of to-be-printed pages to print on the front side or the back side of the paper. Apparently, the self-rotation sub-option and the auto-centering sub-option are used to indicate the printing position of the to-be-printed pages within the current printing range. If there is no selected option in area 201, the image forming device performs single-sided printing on all the to-be-printed pages of the current printing task. When the user is required to perform double-sided printing, the double-sided printing option in area 201 needs to be selected. When this option is selected, the flipping direction of the to-be-printed pages during double-sided printing can also be selected to configure the second side of double-sided printing. The flipping direction includes flipping on a long edge or flipping on a short edge. The user can select the corresponding option accordingly based on specific requirements whether the long edge or short edge needs to be flipped. When only the double-sided printing option is selected in area 201, the image forming device performs double-sided printing on all pages set in the printing range. When the user selects the double-sided printing option and the single-sided printing option at the same time, the image forming device performs single-sided and double-sided mixed printing. At this time, the user needs to select the page numbers for the pages to be printed on one side and select the printing position of each page on the front side or on the back side of the paper. If the user only selects the single-sided printing option, it means that the image forming device performs single-sided printing on all pages set in the current printing range. At this moment, the printing position of each page can be set according to user needs.

If the user does not set the printing position of each page, the image forming device performs single-sided printing on the front side of the paper for all the pages set in the printing range based on the preset default parameter information. In other embodiments, the preset default parameter information can be single-sided printing on the back side of the paper by default. That is, when the received printing position information indicates that the user does not set the printing position of each page, the image forming device performs single-sided printing on all the pages set in the printing range, and prints them all on the back side of the paper.

If the user sets the printing position of single-sided printing for each page, the image forming device determines the number of pages and the printing position of each to-be-printed page according to the received printing position information of each page and the page number(s) information set in the printing range. Specifically, in one embodiment, when the user selects the option of printing all pages in the range, and only selects the single-sided printing option and inputs the page numbers for pages to be printed on the back side, the image forming device parses the total number of pages from the printing task, and obtains the page number(s) information for pages to be printed on the front side based on the received page number(s) information for pages to be printed on the back side. When the user selects the options for printing all pages in the range, and only selects the single-sided printing option, but simultaneously inputs the back side page number(s) information for pages to be printed on the back side and the front side page number(s) information for pages to be printed on the front side, the image forming device parses the total number of pages of the printing task and matches the back side page number(s) information and the front side page number(s) information with the total number of pages. If combined back side page number(s) information and front side page number(s) information is less than the total number of pages, the number of pages that are not specified in the printing position can be determined, so that the image forming device performs single-sided printing of these to-be-printed pages on the default position of the paper based on the preset default parameter information. Apparently, the printing option also includes "don't print". For example, for pages that are not specified for the printing position in the total number of pages, for pages that are not included in the page numbers provided in the printing range, etc., those pages do not need to be printed. If the combination of the back-page numbers and the front-page numbers exceeds the total number of pages, it means that the user has entered incorrect page numbers or conflicting page numbers. If a same page can be printed both on the back side and on the front side, the image forming device can automatically identify the incorrect page(s) and advise the user that the page number entered is incorrect or conflicting. When the user selects an option of printing all pages in the printing range option, the user can select the double-sided printing option and single-sided printing option at the same time, and set the page number(s) information for pages to be printed on the back side under the single-sided printing option, the image forming device parses the total number of pages from the printing task, and obtains the double-sided page numbers that need to be printed on both sides based on the received page numbers for printing on the back side (also referred to as "back-page numbers") for single-sided printing. The image forming device then sends the back-page numbers as a single-sided printing task to the image forming device, marks the position information of the back-page numbers as being printed on the back side of the paper when performing the single-sided printing, and sends the double-sided page numbers as a double-sided printing task to the image forming device to perform the double-sided printing. Similarly, when the user selects printing all pages in the printing range option, the user can select the double-sided printing option and single-sided printing option at the same time, and set the page number(s) information for pages to be printed on the front side under the single-sided printing option. It should be noted that due to potential user input errors, whether it is the front-page numbers or the back-page numbers, those numbers will be matched with the page numbers set by the printing range option first to identify whether the page numbers entered by the user are correct, so that when the page numbers do not match, the user will be notified on the interface.

In some embodiments, when the user selects the customizable page option, the image forming device can obtain the customized page numbers corresponding to the printing task. At the same time, if the user selects the double-sided printing option and/or the single-sided printing option, and sets the front-page numbers printed on the front side or sets the back-page numbers printed on the back side under the single-sided printing option, the image forming device matches the parsed customized page numbers with one or the combination of the double-sided page numbers for pages that need to be printed on both sides, the front-page numbers for pages that need to be printed on the front side, and the back-page numbers for pages that need to be printed on the back side, so as to identify the printing mode and corresponding printing position of each customized page number.

The user completes the printing configuration operation for each to-be-printed page in the manner shown in FIG. 2 or by directly operating on the operation panel of the image forming device. The image forming device determines the printing configuration information of each to-be-printed page in response to the printing configuration operation for each to-be-printed page of the target document. As shown in FIG. 2, the printing configuration information may also include information on the number of copies of printing, printing range, printing process, double-sided configuration, single-sided configuration, printing direction, etc. Here, the double-sided configuration information corresponds to the double-sided printing option in area 201 shown in FIG. 2. The single-sided configuration information corresponds to the single-sided printing option in area 201 shown in FIG. 2. The printing position of the single-sided to-be-printed pages can be set separately through the single-sided configuration information.

As shown in FIG. 2, the printing range information, the double-sided configuration information, and the single-sided configuration information jointly determine the printing mode of each to-be-printed page. In some embodiments, the printing range information can be used to determine which to-be-printed pages are not printed, and the double-sided configuration information and the single-sided configuration information can be used to determine whether the remaining to-be-printed pages are printed on one side or on two sides.

In a single-sided and double-sided mixed printing scenario, taking the print driver interface shown in FIG. 2 as an example, the user selects the "current page" option in the printing range, and does not select any option in area 201, then the printing mode of the to-be-printed page corresponding to the current page is single-sided printing. If the user selects the "pages" option in the printing range, that is, to customize the page number range to be printed, and enters the page number range to be printed, such as 1, 5-9. At the same time, the printing mode and printing position of each page in the range are set in the single-sided and double-sided printing configuration interface, such as selecting the double-sided printing option, selecting the single-sided printing option in area 201, and entering the page number range (e.g., 1, 5) in the printing on the front side option or printing on the back side option. Based on the page number ranges (e.g., 1 and 5-9) set in the aforementioned printing range setting, it can be concluded that the printing mode of the to-be-printed pages corresponding to pages 2-4 is not printed, the printing mode of the to-be-printed pages corresponding to pages 1 and 5 is single-sided printing, and the printing mode of the to-be-printed pages corresponding to pages 6 to 9 is double-sided printing.

Next, the image forming device generates a to-be-printed task of the target document in response to a confirmation for the printing configuration information (e.g., the user clicks the "confirm" button), and determines the printing parameters of the to-be-printed task according to the printing configuration information. The image forming device then sends the to-be-printed task to the print engine for printing.

Here, the printing parameters can be represented in the form of a flag bit corresponding to the printing configuration information. For example, the printing mode flag bit can be used to identify which to-be-printed pages in the target document are double-sided printing, which to-be-printed pages are single-sided printing, and which to-be-printed pages do not need to be printed (corresponding to the printing range information in the printing configuration information). For example, if the value of the printing mode flag bit is 1, it means that a to-be-printed page needs to be printed on one side, if the value of the printing mode flag bit is 2, it means that a to-be-printed page needs to be printed on both sides, and if the value of the printing mode flag bit is 0, it means that a to-be-printed page does not need to be printed. The printing position flag bit can also be used to identify the printing position of a to-be-printed page for single-sided printing. For example, if the value of the printing position flag bit is 1, it means that the printing position of the to-be-printed page is on the front side of the paper. If the value of the printing position flag bit is 0, it means that the printing position of the to-be-printed page is on the back side of the paper. The image forming device can quickly confirm the printing mode and printing position of each to-be-printed page through the values of the flag bit, thereby the complexity of the printing logic of the image forming device can be simplified to a certain extent and the calculation consumption of the image forming device can be reduced.

Step 102: If the printing mode of the first to-be-printed page is single-sided printing, determine the printing position of the first to-be-printed page.

The printing position refers to the specific position of printing on the imaging medium. The printing position includes on the front side of the paper or on the back side of the paper. The printing position can be determined according to the printing parameters of the current printing task. In some embodiments, in a single-sided and double-sided mixed printing scenario, when the first to-be-printed page is printed on one side, the printing position of the first to-be-printed page can be determined according to the printing position flag bit in the aforementioned printing parameters. When the printing position flag bit is 1, it indicates that the printing position of the first to-be-printed page is on the front side of the paper, and when the printing position flag bit is 0, it indicates that the printing position of the first to-be-printed page is on the back side of the paper.

In some embodiments, the printing position of the to-be-printed page under single-sided printing can be directly determined according to the single-sided printing option in area 201 as shown in FIG. 2. That is, the value of the printing position flag bit of the to-be-printed pages corresponding to these page numbers is determined according to the front-page numbers entered by the user in the printing on the front side option in area 201 and the back-page numbers entered in the printing on the back side option in area 201, so that the printing position of each to-be-printed page can be determined.

The printing position of a to-be-printed page under double-sided printing can be determined according to the typesetting situation. Specifically, the printing position of a to-be-printed page can be determined according to the printing position of the to-be-printed page adjacent to it. When the image forming device prints the first to-be-printed page, it is determined whether the printing mode of the first to-be-printed page is double-sided printing. When the printing mode of the first to-be-printed page is double-sided printing, the printing position of the first to-be-printed page can be determined based on a to-be-printed page adjacent to it. For example, when the previous to-be-printed page adjacent to the first to-be-printed page is the second side of single-sided printing or double-sided printing (e.g., printed on the back of the paper), the printing position of the first to-be-printed page is the front of the paper. If the previous to-be-printed page adjacent to the first to-be-printed page is the first side of double-sided printing (e.g., printed on the front side of the paper), the printing position of the first to-be-printed page is on the back side of the paper.

Step 103: Print out the first to-be-printed page based on the printing position.

Printout includes single-sided printout or double-sided printout. When the printing position of the first to-be-printed page is on the front side of the paper, the first to-be-printed page is printed on one side. In the existing technologies, when the first to-be-printed page is printed on a double-sided printing mode, a blank page/separator page (filling blanks) needs to be inserted after the first to-be-printed page, and thus double-sided printing is actually achieved by filling in the blanks. However, this method still requires that the paper needs to be turned over to the back side after the front side is printed, and it needs to go through the paper feeding process of the exposure component, the developing component, the transfer component, and the fixing component in sequence. Although this paper feeding method does not perform exposure, development, and transfer, it still consumes additional power and time. For the above scenario, in the embodiments disclosed herein, the first to-be-printed page is directly printed on one side, without the step of additional paper feeding on the back side as the existing technologies do. After the first to-be-printed page is printed on the front side of the paper, the paper is directly output, and there is no additional toner consumption caused by filling blanks. While saving the power consumption of the printer, this also reduces the printing time of the to-be-printed pages.

When the printing mode of the first to-be-printed page is single-sided printing, and the printing position is the back of the paper, a preset filling page can be obtained. At this time, the preset filling page needs to be inserted before the first to-be-printed page. After that, the preset filling page can be printed as the first side of double-sided printing (e.g., printed on the front of the paper) and the first to-be-printed page can be printed as the second side of double-sided printing (e.g., printed on the back of the paper). The preset filling page and the first to-be-printed page can be printed on both sides. Optionally, the preset filling page can be specifically implemented as a blank page. That is, the blank page is printed as the first side of double-sided printing, and the first to-be-printed page is printed as the second side of double-sided printing, so that the double-sided printing is performed. The printed outcome is: the front side of the paper is blank, and the back side of the paper is the content corresponding to the first to-be-printed page.

When the printing mode of the first to-be-printed page is double-sided printing, it can be determined whether the first to-be-printed page is the first side of double-sided printing. The first side of double-sided printing specifically refers to the front side of the paper for printing the to-be-printed page. Double-sided printing is printing on both the front side and the back side of the paper, so the page printed on the front side of the paper is the first side of double-sided printing, and the page printed on the back side of the paper is the second side of double-sided printing. When the previous to-be-printed page of the first to-be-printed page is the second side of double-sided printing or the previous to-be-printed page is single-sided printing, it can be determined that the first to-be-printed page is the first side of double-sided printing. If the printing mode of a second to-be-printed page is not double-sided printing (that is, the printing mode of the second to-be-printed page is single-sided printing or not printed), the first to-be-printed page is printed in single-sided printing. At this time, the printing position of the first to-be-printed page is on the front side of the paper. When the first to-be-printed page is the first side of double-sided printing, but the next to-be-printed page adjacent to it is not double-sided printing, the first to-be-printed page can be printed in the single-sided printing mode (that is, printed on the front side of the paper), which saves toner and reduces printing time.

In the foregoing embodiment, when the printing mode of the second to-be-printed page is double-sided printing, the first to-be-printed page is printed as the first side of double-sided printing and the second to-be-printed page is printed as the second side of double-sided printing, and the first to-be-printed page and the second to-be-printed page are double-sided printed. Specifically, when the first to-be-printed page is the first side of double-sided printing, and the next to-be-printed page adjacent to it is also double-sided printing, the first to-be-printed page and the second to-be-printed page can be double-sided printed. At this time, the first to-be-printed page is printed on the front side of the paper, and the second to-be-printed page is printed on the back side of the same paper. In the foregoing embodiment, if the first to-be-printed page is the second side of double-sided printing, the first to-be-printed page can be double-sided printed. If the printing mode of the first to-be-printed page is "do not print", the first to-be-printed page is skipped, that is, prevent printing out the first to-be-printed page.

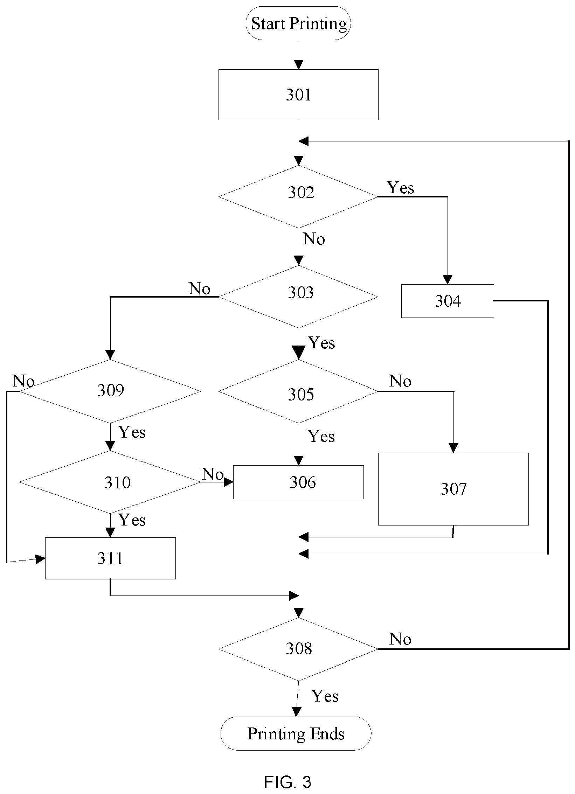

In order to further understand the technical solution of the present disclosure, FIG. 3 is a flowchart of a single-sided and double-sided mixed printing method in accordance with an embodiment of the present disclosure. As shown in FIG. 3, the method includes the following steps.

Step 301: Determine the printing mode of each to-be-printed page according to the print settings.

When single-sided and double-sided mixed printing is performed, a user can perform double-sided printing settings through the print driver interface of a computer, a personal terminal, or other equipment, or directly perform double-sided printing settings on the operation panel of the image forming device. The double-sided printing settings may include selecting the printing range, selecting the pages to be printed on one side, and selecting the pages to be printed on two sides. After selecting the pages to be printed on one side, the user can also set whether the pages to be printed on one side are printed on the front side of the paper or on the back side of the paper. The default option is to print on the front side of the paper. After that, the user confirms that the print settings are correct and clicks the "confirm" button to send a printing task with printing configuration information to the image forming device. After receiving the printing task, the image forming device activates the print engine or the print module to start printing. The printing mode can be identified in the form of a flag bit. If the flag bit is 0, it means that this page is not printed, and if the flag bit is 1, it means that this page is printed on one side. If the flag bit is 2, it means that this page is printed on as a double-sided printing. Then, the printing of each to-be-printed page is performed in the printing order.

Step 302: Determine whether the flag bit of the current to-be-printed page is 0 (e.g., not to be printed). If yes, proceed to step 304; if no, proceed to step 303.

Step 303: Determine whether the flag bit of the current to-be-printed page is 1 (e.g., single-sided printing). If yes, proceed to step 305; if no, proceed to step 309.

Step 304: Skip the page printing and proceed to step 308.

Step 305: Determine whether the current to-be-printed page is printed on the front side of the paper. If yes, proceed to step 306; if no, proceed to step 307.

Step 306: Issue a single-sided printing task for the current page. That is, the current to-be-printed page is marked as single-sided printing and printed on the front side of the paper. Then, proceed to step 308.

Step 307: Insert/generate a blank page before the current to-be-printed page, and issue it to the image forming device as a double-sided printing. That is, change the flag bit of the current to-be-printed page to 2, and send it as a double-sided printing task. Specifically, use the blank page as the first side of the double-sided printing, and use the current to-be-printed page as the second side of the double-sided printing, and print it out as a double-sided printing task. Then proceed to step 308.

Step 308: Determine whether the document has been completely printed. If yes, the printing ends; if no, proceed to step 302.

Step 309: Determine whether the current to-be-printed page is the first side of double-sided printing. If yes, proceed to step 310; if no, proceed to step 311.

Step 310: Determine whether the next to-be-printed page is double-sided printing. If yes, proceed to step 311; if no, proceed to step 306.

Step 311: Issue the current to-be-printed page as a double-sided printing task. The current to-be-printed page is used as the first side of the double-sided printing, and the next to-be-printed page is used as the second side of the double-sided printing, and the double-sided printing task is issued for printing.

Then, proceed to step 308. Printing of each to-be-printed page is executed in sequence through the above process until the printing is completed.

Embodiments of the present disclosure provide a single-sided and double-sided mixed printing method. When executing a single-sided and double-sided mixed printing task, the current printing mode of an image forming device is determined by determining whether each to-be-printed page is single-sided printed. If the current to-be-printed page is single-sided printed and its printing position is on the front side of the paper, the image forming device switches to the single-sided printing mode and performs single-sided printing on the to-be-printed page. This saves printing time and avoids the tedious operation of single-sided and double-sided mixed printing, thereby improving the user's printing experience.

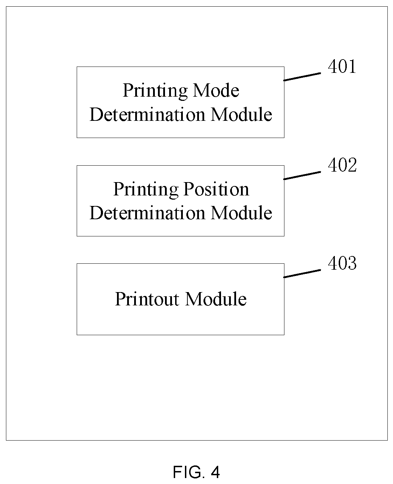

Corresponding to the aforementioned single-sided and double-sided mixed printing method, an embodiment of the present disclosure further provides an image forming device. FIG. 4 is a schematic structural diagram of an image forming device in accordance with an embodiment of the disclosure. As shown in FIG. 4, the image forming device includes: a printing mode determination module 401, a printing position determination module 402, and a printout module 403.

The printing mode determination module 401 is configured to determine the printing mode of the first to-be-printed page currently to be printed. The printing mode includes single-sided printing or double-sided printing.

The printing position determination module 402 is configured to determine the printing position of the first to-be-printed page. The printing position includes on the front side of the paper or on the back side of the paper.

The printout module 403 is configured to print out the first to-be-printed page based on the print position. The printout includes single-sided printout or double-sided printout.

The image forming device in the embodiment shown in FIG. 4 may be configured to execute the technical solutions of the method embodiments shown in FIGS. 1-3 of the disclosure. The implementation principle and technical effects thereof can further refer to the relevant description in the method embodiments.

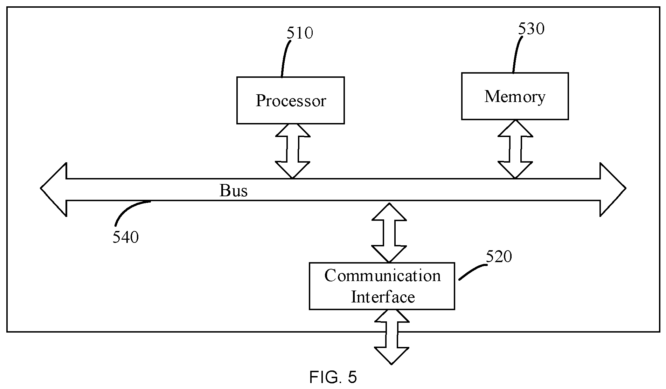

FIG. 5 is a schematic structural diagram of an electronic device in accordance with an embodiment of the present disclosure. As shown in FIG. 5, the electronic device may include at least one processor and at least one memory communicatively connected to the processor, where the memory stores program instructions executable by the processor, and the processor calls the program instructions to execute the single-sided and double-sided mixed printing method described by the embodiments shown in FIGS. 1-3 of present disclosure.

As shown in FIG. 5, the electronic device is presented in the form of a general-purpose computing device. The components of the electronic device may include but are not limited to: one or more processors 510, a communication interface 520, a memory 530, and a communication bus 540 connecting different system components (e.g. the memory 530, the communication interface 520 and the processor 510).

The communication bus 540 represents one or more of several types of bus structures, including a memory bus or memory controller, a peripheral bus, a graphics acceleration port, a processor, or a local bus using any of a variety of bus structures. For example, these architectures include but are not limited to an industry-standard architecture (ISA) bus, micro channel architecture (MAC) bus, enhanced ISA bus, video electronics standards association (VESA) local bus, and peripheral component interconnection (PCI) bus.

Electronic devices typically include a variety of computer-readable media. These media can be any available media that can be accessed by the electronic device, including volatile and non-volatile media, removable and non-removable media.

The Memory 530 may include a computer-readable medium in the form of a volatile memory, such as a random-access memory (RAM) and/or a cache memory. The electronic device may further include other removable/non-removable, volatile/non-volatile computer system storage media. The Memory 530 may include at least one program product having a set (e.g., at least one) of program modules that are configured to perform the functions of each embodiment disclosed herein.

A program/utility having a set (at least one) of program modules may be stored in memory 530. Such program modules include but are not limited to, an operating system, one or more application programs, other program modules, and program data, each of which or a combination thereof may include the implementation in a network environment. The program modules generally perform the functions and/or methods of the embodiments described in the disclosure.

The processor 510 executes various functional applications and data processing by running the programs stored in the memory 530, for example, implementing the single-sided and double-sided mixed printing methods described in the embodiments shown in FIGS. 1-3 of the disclosure.

An embodiment disclosed herein provides a computer-readable storage medium, where the computer-readable storage medium stores computer instructions, where the computer instructions enable the computer to execute the single-sided and double-sided mixed printing methods described in the embodiments shown in FIGS. 1-3 disclosed herein.

The computer-readable storage medium may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, equipment or device, or any combination thereof. More specific examples (non-exhaustive list) of computer-readable storage media include an electrical connection with one or more wires, a portable computer disk, a hard disk, a random-access memory (RAM), a read-only memory (ROM), an erasable programmable read-only memory (EPROM) or flash memory, an optical fiber, a portable compact disk read-only memory (CD-ROM), an optical storage device, a magnetic storage device, or any suitable combination thereof. In the disclosure, a computer-readable storage medium may be any tangible medium containing or storing a program that may be used by or in combination with an instruction execution system, equipment, or device.

The above is a description of specific embodiments of the disclosure. Other embodiments are also possible and are within the scope of the appended claims. In some scenarios, the actions or steps recited in the claims may be performed in an order different from that in the embodiments and still achieve the desired results. Additionally, the processes described in the drawings do not necessarily require the specific order or continuous order as shown in the drawings to achieve the desired results. In some embodiments, multitasking and parallel processing are also possible or may be advantageous.

It should be noted that the devices described in the embodiments of the disclosure may include but are not limited to personal computers (PC), personal digital assistants (PDA), wireless handheld devices, tablet computers, mobile phones, MP3 displays, MP4 displays, etc.

It should be noted that in some embodiments, the disclosed systems, devices, and methods may be implemented in other ways. For example, the device embodiments described above are only schematic, and the division of the units is only a logical function division. There may be other division methods in actual implementations. For example, multiple units or components can be combined or integrated into another system, or some features can be ignored or not executed. Moreover, the mutual coupling, direct coupling, or communication connection shown or discussed can be through some interfaces, indirect coupling, or communication connection of devices or units, which can be electrical, mechanical, or other forms.

Additionally, a functional unit in an embodiment of the disclosure may be integrated into one processing unit, a unit may exist physically separately, or two or more units may be integrated into one unit. The above-integrated unit may be implemented in the form of hardware or the form of hardware plus software functional units.

The aforementioned integrated unit implemented in the form of a software functional unit can be stored in a computer-readable storage medium. The aforementioned software functional unit is stored in a storage medium, including several instructions for a computer device (e.g., a personal computer, a connector, or a network device, etc.) or a processor to perform some steps of the methods described in an embodiment of the disclosure. The aforementioned storage medium includes a U disk, mobile hard disk, ROM, RAM, disk or optical disk, and other media that can store program codes.

The foregoing description includes merely some embodiments of the disclosure and is not intended to limit the disclosure. Any modifications, equivalent substitutions, improvements, etc., made within the spirits and principles of the disclosure should be included in the scope of protection of the disclosure.

## Claims

1. A single-sided and double-sided mixed printing method, comprising:
determining (301) a printing mode of a first to-be-printed page currently to be printed
wherein the printing mode includes a single-sided printing or a double-sided printing;
when the printing mode of the first to-be-printed page is the single-sided printing, determining a printing position of the first to-be-printed page, wherein the printing position includes on a front side of a paper or a back side of the paper; and
printing out the first to-be-printed page based on the printing position, wherein the printing out includes a single-sided printout or a double-sided printout, wherein,
when the printing mode of the first to-be-printed page is the double-sided printing, the method further comprises:
determining (309) whether the first to-be-printed page is a first side of the double-sided printing;
**characterized in that**:
when the first to-be-printed page is a first side of double-sided printing, determining (310) a
printing mode of a second to-be-printed page, wherein the second to-be-printed page is a next to-be-printed page adjacent to the first to-be-printed page; and
when the printing mode of the second to-be-printed page is not double-sided printing, printing out the first to-be-printed page as the single-sided printing (306).

2. The method according to claim 1, wherein the printing mode and the printing position are determined based on printing parameters of a printing task corresponding to the first to-be-printed page, and before determining the printing mode of the first to-be-printed page currently to be printed, the method further comprises:
in response to a printing configuration operation on each to-be-printed page of a target document, determining printing configuration information of each to-be-printed page; and
in response to a confirmation for the printing configuration information, generating a to-be-printed task of the target document, and determining printing parameters of the to-be-printed task according to the printing configuration information.

3. The method according to claim 1, wherein printing out the first to-be-printed page based on the printing position comprises:
when the printing position of the first to-be-printed page is on the front side of the paper, printing out the first to-be-printed page as the single-sided printing; or
when the printing position of the first to-be-printed page is on the back side of the paper, obtaining a preset filling page, inserting the preset filling page before the first to-be-printed page, and printing out the preset filling page and the first to-be-printed page as the double-sided printout by using the preset filling page as a first side of double-sided printing and the first to-be-printed page as a second side of double-sided printing.

4. The method according to claim 1, wherein, when the printing mode of the second to-be-printed page is double-sided printing, the method further comprises:
printing out the first to-be-printed page and the second to-be-printed page as the double-sided printout by using the first to-be-printed page as the first side of double-sided printing and the second to-be-printed page as a second side of double-sided printing.

5. The method according to claim 1, wherein, when the printing mode of the first to-be-printed page is the double-sided printing, the method further comprises:
determining whether the first to-be-printed page is a second side of the double-sided printing; and
when the first to-be-printed page is the second side of the double-sided printing, printing out the first to-be-printed page as the double-side printing.

6. The method according to claim 1, wherein the printing mode further includes "do not print", and when the printing mode of the first to-be-printed page is "do not print", the method further comprises:
preventing printing out the first to-be-printed page.

7. An electronic device, comprising:
at least one processor (510); and
at least one memory (530) in communication with the processor, the memory storing
program instructions executable by the processor, wherein the processor is configured to call the program instructions to execute a method according to claim 1.

8. The electronic device according to claim 7, wherein the printing mode and the printing position are determined based on printing parameters of a printing task corresponding to the first to-be-printed page, and before determining the printing mode of the first to-be-printed page currently to be printed, the method further comprises:
in response to a printing configuration operation on each to-be-printed page of a target document, determining printing configuration information of each to-be-printed page; and
in response to a confirmation for the printing configuration information, generating a to-be-printed task of the target document, and determining printing parameters of the to-be-printed task according to the printing configuration information.

9. The electronic device according to claim 7, wherein printing out the first to-be-printed page based on the printing position comprises:
when the printing position of the first to-be-printed page is on the front side of the paper, printing out the first to-be-printed page as the single-sided printing; or
when the printing position of the first to-be-printed page is on the back side of the paper, obtaining a preset filling page, inserting the preset filling page before the first to-be-printed page, and printing out the preset filling page and the first to-be-printed page as the double-sided printout by using the preset filling page as a first side of double-sided printing and the first to-be-printed page as a second side of double-sided printing.

10. The electronic device according to claim 7, wherein, when the printing mode of the second to-be-printed page is double-sided printing, the method further comprises:
printing out the first to-be-printed page and the second to-be-printed page as the double-sided printout by using the first to-be-printed page as the first side of double-sided printing and the second to-be-printed page as a second side of double-sided printing.

11. The electronic device according to claim 7, wherein, when the printing mode of the first to-be-printed page is the double-sided printing, the method further comprises:
determining whether the first to-be-printed page is a second side of the double-sided printing; and
when the first to-be-printed page is the second side of the double-sided printing, printing out the first to-be-printed page as the double-side printing.

12. The electronic device according to claim 7, wherein the printing mode further includes "do not print", and when the printing mode of the first to-be-printed page is "do not print", the method further comprises:
preventing printing out the first to-be-printed page.

13. A non-transitory computer-readable storage medium, storing a computer program that, when being executed, causes at least one processor to implement the single-sided and double-sided mixed printing method according to any one of claims 1 to 6.

## Patentansprüche

1. Verfahren zum gemischten einseitigen und beidseitigen Drucken, umfassend:
Bestimmen (301) eines Druckmodus einer ersten zu druckenden Seite, die derzeit zu drucken ist, wobei der Druckmodus ein einseitiges Drucken oder ein beidseitiges Drucken umfasst; wenn der Druckmodus der ersten zu druckenden Seite das einseitige Drucken ist, Bestimmen einer Druckposition der ersten zu druckenden Seite, wobei die Druckposition auf einer Vorderseite eines Papiers oder einer Rückseite des Papiers umfasst; und
Ausdrucken der ersten zu druckenden Seite basierend auf der Druckposition, wobei das Ausdrucken ein einseitiges Ausdrucken oder ein beidseitiges Ausdrucken umfasst, wobei,
wenn der Druckmodus der ersten zu druckenden Seite das beidseitige Drucken ist, das Verfahren ferner umfasst:
Bestimmen (309), ob die erste zu druckende Seite eine erste Seite des beidseitigen Druckens ist;
**dadurch gekennzeichnet, dass**:
wenn die erste zu druckende Seite eine erste Seite des beidseitigen Druckens ist, Bestimmen (310) eines Druckmodus einer zweiten zu druckenden Seite, wobei die zweite zu druckende Seite eine nächste zu druckende Seite ist, die der ersten zu druckenden Seite benachbart ist; und
wenn der Druckmodus der zweiten zu druckenden Seite nicht beidseitiges Drucken ist, Ausdrucken der ersten zu druckenden Seite als das einseitige Drucken (306).

2. Verfahren nach Anspruch 1, wobei der Druckmodus und die Druckposition basierend auf Druckparametern einer Druckaufgabe bestimmt werden, die der ersten zu druckenden Seite entspricht, und vor dem Bestimmen des Druckmodus der ersten zu druckenden Seite, die derzeit zu drucken ist, das Verfahren ferner umfasst:
als Reaktion auf einen Druckkonfigurationsvorgang an jeder zu druckenden Seite eines Zieldokuments, Bestimmen von Druckkonfigurationsinformationen jeder zu druckenden Seite; und
als Reaktion auf eine Bestätigung für die Druckkonfigurationsinformationen, Erzeugen einer zu druckenden Aufgabe des Zieldokuments und Bestimmen von Druckparametern der zu druckenden Aufgabe gemäß den Druckkonfigurationsinformationen.

3. Verfahren nach Anspruch 1, wobei das Ausdrucken der ersten zu druckenden Seite basierend auf der Druckposition umfasst:
wenn die Druckposition der ersten zu druckenden Seite auf der Vorderseite des Papiers ist, Ausdrucken der ersten zu druckenden Seite als das einseitige Drucken; oder
wenn die Druckposition der ersten zu druckenden Seite auf der Rückseite des Papiers ist, Erhalten einer voreingestellten Füllseite, Einfügen der voreingestellten Füllseite vor der ersten zu druckenden Seite, und Ausdrucken der voreingestellten Füllseite und der ersten zu druckenden Seite als das beidseitige Ausdrucken, indem die voreingestellte Füllseite als eine erste Seite des beidseitigen Druckens und die erste zu druckende Seite als eine zweite Seite des beidseitigen Druckens verwendet wird.

4. Verfahren nach Anspruch 1, wobei, wenn der Druckmodus der zweiten zu druckenden Seite beidseitiges Drucken ist, das Verfahren ferner umfasst:
Ausdrucken der ersten zu druckenden Seite und der zweiten zu druckenden Seite als das beidseitige Ausdrucken, indem die erste zu druckende Seite als die erste Seite des beidseitigen Druckens und die zweite zu druckende Seite als eine zweite Seite des beidseitigen Druckens verwendet wird.

5. Verfahren nach Anspruch 1, wobei, wenn der Druckmodus der ersten zu druckenden Seite das beidseitige Drucken ist, das Verfahren ferner umfasst:
Bestimmen, ob die erste zu druckende Seite eine zweite Seite des beidseitigen Druckens ist; und
wenn die erste zu druckende Seite die zweite Seite des beidseitigen Druckens ist, Ausdrucken der ersten zu druckenden Seite als das beidseitige Drucken.

6. Verfahren nach Anspruch 1, wobei der Druckmodus ferner "nicht drucken" umfasst, und wenn der Druckmodus der ersten zu druckenden Seite "nicht drucken" ist, das Verfahren ferner umfasst:
Verhindern des Ausdruckens der ersten zu druckenden Seite.

7. Elektronische Vorrichtung, umfassend:
mindestens einen Prozessor (510); und
mindestens einen Speicher (530), der mit dem Prozessor kommuniziert, wobei der Speicher Programmanweisungen speichert, die durch den Prozessor ausführbar sind, wobei der Prozessor dazu ausgebildet ist, die Programmanweisungen aufzurufen, um ein Verfahren nach Anspruch 1 auszuführen.

8. Elektronische Vorrichtung nach Anspruch 7, wobei der Druckmodus und die Druckposition basierend auf Druckparametern einer Druckaufgabe bestimmt werden, die der ersten zu druckenden Seite entspricht, und vor dem Bestimmen des Druckmodus der ersten zu druckenden Seite, die derzeit zu drucken ist, das Verfahren ferner umfasst:
als Reaktion auf einen Druckkonfigurationsvorgang an jeder zu druckenden Seite eines Zieldokuments, Bestimmen von Druckkonfigurationsinformationen jeder zu druckenden Seite; und
als Reaktion auf eine Bestätigung für die Druckkonfigurationsinformationen, Erzeugen einer zu druckenden Aufgabe des Zieldokuments und Bestimmen von Druckparametern der zu druckenden Aufgabe gemäß den Druckkonfigurationsinformationen.

9. Elektronische Vorrichtung nach Anspruch 7, wobei das Ausdrucken der ersten zu druckenden Seite basierend auf der Druckposition umfasst:
wenn die Druckposition der ersten zu druckenden Seite auf der Vorderseite des Papiers ist, Ausdrucken der ersten zu druckenden Seite als das einseitige Drucken; oder
wenn die Druckposition der ersten zu druckenden Seite auf der Rückseite des Papiers ist, Erhalten einer voreingestellten Füllseite, Einfügen der voreingestellten Füllseite vor der ersten zu druckenden Seite, und Ausdrucken der voreingestellten Füllseite und der ersten zu druckenden Seite als das beidseitige Ausdrucken, indem die voreingestellte Füllseite als eine erste Seite des beidseitigen Druckens und die erste zu druckende Seite als eine zweite Seite des beidseitigen Druckens verwendet wird.

10. Elektronische Vorrichtung nach Anspruch 7, wobei, wenn der Druckmodus der zweiten zu druckenden Seite beidseitiges Drucken ist, das Verfahren ferner umfasst:
Ausdrucken der ersten zu druckenden Seite und der zweiten zu druckenden Seite als das beidseitige Ausdrucken, indem die erste zu druckende Seite als die erste Seite des beidseitigen Druckens und die zweite zu druckende Seite als eine zweite Seite des beidseitigen Druckens verwendet wird.

11. Elektronische Vorrichtung nach Anspruch 7, wobei, wenn der Druckmodus der ersten zu druckenden Seite das beidseitige Drucken ist, das Verfahren ferner umfasst:
Bestimmen, ob die erste zu druckende Seite eine zweite Seite des beidseitigen Druckens ist; und
wenn die erste zu druckende Seite die zweite Seite des beidseitigen Druckens ist, Ausdrucken der ersten zu druckenden Seite als das beidseitige Drucken.

12. Elektronische Vorrichtung nach Anspruch 7, wobei der Druckmodus ferner "nicht drucken" umfasst, und wenn der Druckmodus der ersten zu druckenden Seite "nicht drucken" ist, das Verfahren ferner umfasst:
Verhindern des Ausdruckens der ersten zu druckenden Seite.

13. Nicht-transitorisches computerlesbares Speichermedium, das ein Computerprogramm speichert, das, wenn es ausgeführt wird, mindestens einen Prozessor veranlasst, das Verfahren zum gemischten einseitigen und beidseitigen Drucken nach einem der Ansprüche 1 bis 6 zu implementieren.

## Revendications

1. Procédé d'impression mixte recto et recto verso, comprenant:
déterminer (301) un mode d'impression d'une première page à imprimer devant être actuellement imprimée, dans lequel le mode d'impression inclut une impression recto ou une impression recto verso; lorsque le mode d'impression de la première page à imprimer est l'impression recto, déterminer une position d'impression de la première page à imprimer, dans lequel la position d'impression inclut sur un côté recto d'un papier ou un côté verso du papier; et
imprimer la première page à imprimer sur la base de la position d'impression, dans lequel l'impression inclut une sortie imprimée recto ou une sortie imprimée recto verso, dans lequel,
lorsque le mode d'impression de la première page à imprimer est l'impression recto verso, le procédé comprend en outre:
déterminer (309) si la première page à imprimer est un premier côté de l'impression recto verso;
**caractérisé en ce que**:
lorsque la première page à imprimer est un premier côté de l'impression recto verso, déterminer (310) un mode d'impression d'une deuxième page à imprimer, dans lequel la deuxième page à imprimer est une page suivante à imprimer adjacente à la première page à imprimer; et
lorsque le mode d'impression de la deuxième page à imprimer n'est pas l'impression recto verso, imprimer la première page à imprimer comme l'impression recto (306).

2. Procédé selon la revendication 1, dans lequel le mode d'impression et la position d'impression sont déterminés sur la base de paramètres d'impression d'une tâche d'impression correspondant à la première page à imprimer, et avant de déterminer le mode d'impression de la première page à imprimer devant être actuellement imprimée, le procédé comprend en outre:
en réponse à une opération de configuration d'impression sur chaque page à imprimer d'un document cible, déterminer des informations de configuration d'impression de chaque page à imprimer; et
en réponse à une confirmation des informations de configuration d'impression, générer une tâche à imprimer du document cible, et déterminer des paramètres d'impression de la tâche à imprimer selon les informations de configuration d'impression.

3. Procédé selon la revendication 1, dans lequel imprimer la première page à imprimer sur la base de la position d'impression comprend:
lorsque la position d'impression de la première page à imprimer est sur le côté recto du papier, imprimer la première page à imprimer comme l'impression recto; ou
lorsque la position d'impression de la première page à imprimer est sur le côté verso du papier, obtenir une page de remplissage prédéfinie, insérer la page de remplissage prédéfinie avant la première page à imprimer, et imprimer la page de remplissage prédéfinie et la première page à imprimer comme la sortie imprimée recto verso en utilisant la page de remplissage prédéfinie comme un premier côté de l'impression recto verso et la première page à imprimer comme un deuxième côté de l'impression recto verso.

4. Procédé selon la revendication 1, dans lequel, lorsque le mode d'impression de la deuxième page à imprimer est l'impression recto verso, le procédé comprend en outre:
imprimer la première page à imprimer et la deuxième page à imprimer comme la sortie imprimée recto verso en utilisant la première page à imprimer comme le premier côté de l'impression recto verso et la deuxième page à imprimer comme un deuxième côté de l'impression recto verso.

5. Procédé selon la revendication 1, dans lequel, lorsque le mode d'impression de la première page à imprimer est l'impression recto verso, le procédé comprend en outre:
déterminer si la première page à imprimer est un deuxième côté de l'impression recto verso; et
lorsque la première page à imprimer est le deuxième côté de l'impression recto verso, imprimer la première page à imprimer comme l'impression recto verso.

6. Procédé selon la revendication 1, dans lequel le mode d'impression inclut en outre «ne pas imprimer», et lorsque le mode d'impression de la première page à imprimer est «ne pas imprimer», le procédé comprend en outre:
empêcher l'impression de la première page à imprimer.

7. Dispositif électronique, comprenant:
au moins un processeur (510); et
au moins une mémoire (530) en communication avec le processeur, la mémoire stockant des instructions de programme exécutables par le processeur, dans lequel le processeur est configuré pour appeler les instructions de programme afin d'exécuter un procédé selon la revendication 1.

8. Dispositif électronique selon la revendication 7, dans lequel le mode d'impression et la position d'impression sont déterminés sur la base de paramètres d'impression d'une tâche d'impression correspondant à la première page à imprimer, et avant de déterminer le mode d'impression de la première page à imprimer devant être actuellement imprimée, le procédé comprend en outre:
en réponse à une opération de configuration d'impression sur chaque page à imprimer d'un document cible, déterminer des informations de configuration d'impression de chaque page à imprimer; et
en réponse à une confirmation des informations de configuration d'impression, générer une tâche à imprimer du document cible, et déterminer des paramètres d'impression de la tâche à imprimer selon les informations de configuration d'impression.

9. Dispositif électronique selon la revendication 7, dans lequel imprimer la première page à imprimer sur la base de la position d'impression comprend:
lorsque la position d'impression de la première page à imprimer est sur le côté recto du papier, imprimer la première page à imprimer comme l'impression recto; ou
lorsque la position d'impression de la première page à imprimer est sur le côté verso du papier, obtenir une page de remplissage prédéfinie, insérer la page de remplissage prédéfinie avant la première page à imprimer, et imprimer la page de remplissage prédéfinie et la première page à imprimer comme la sortie imprimée recto verso en utilisant la page de remplissage prédéfinie comme un premier côté de l'impression recto verso et la première page à imprimer comme un deuxième côté de l'impression recto verso.

10. Dispositif électronique selon la revendication 7, dans lequel, lorsque le mode d'impression de la deuxième page à imprimer est l'impression recto verso, le procédé comprend en outre:
imprimer la première page à imprimer et la deuxième page à imprimer comme la sortie imprimée recto verso en utilisant la première page à imprimer comme le premier côté de l'impression recto verso et la deuxième page à imprimer comme un deuxième côté de l'impression recto verso.

11. Dispositif électronique selon la revendication 7, dans lequel, lorsque le mode d'impression de la première page à imprimer est l'impression recto verso, le procédé comprend en outre:
déterminer si la première page à imprimer est un deuxième côté de l'impression recto verso; et
lorsque la première page à imprimer est le deuxième côté de l'impression recto verso, imprimer la première page à imprimer comme l'impression recto verso.

12. Dispositif électronique selon la revendication 7, dans lequel le mode d'impression inclut en outre «ne pas imprimer», et lorsque le mode d'impression de la première page à imprimer est «ne pas imprimer», le procédé comprend en outre:
empêcher l'impression de la première page à imprimer.

13. Support de stockage lisible par ordinateur non transitoire, stockant un programme informatique qui, lorsqu'il est exécuté, amène au moins un processeur à mettre en œuvre le procédé d'impression mixte recto et recto verso selon l'une quelconque des revendications 1 à 6.
